# EUROPEAN PATENT APPLICATION

(11) **EP 3 449 787 A1**
(43) Date of publication of application: **06.03.2019**
(21) Application number: 17188316.8
(22) Date of filing: 29.08.2017
(51) Int. Cl.: A47J 43/08

(54) **GEAR BOX ASSEMBLY**

(71) Applicant: Koninklijke Philips N.V., 5656 AE Eindhoven (NL)
(72) Inventor: Sankaran, Lakshman, 5656 AE Eindhoven (NL); Perumal, Prasath, 5656 AE Eindhoven (NL)
(74) Representative: Steenbeek, Leonardus Johannes

(57) **Abstract**

A gear box assembly (110) comprises: an input gear (118) configured, in use, to be rotatably driven by a power unit (10); a plurality of driven gears (122) configured to engage with and be rotatably driven by the input gear (118), wherein the driven gears (122) are arranged about the input gear (118), such that loads applied to the input gear (118) by virtue of the engagement between the input gear (118) and the plurality of driven gears (122) are balanced; an output gear (124) configured to engage with and be rotatably driven by the driven gears (122); and an output coupler (126) rotatably driven by the output gear (124) and configured to allow a tool (20) to be coupled to and rotatably driven by the gear box assembly (100), wherein a rotational axis of the output coupler (126) is aligned with a rotational axis of the input gear (118). The gear box assembly (100) is advantageously used in a food preparation apparatus (2).

## Description

### FIELD OF THE INVENTION

The present disclosure relates to a gear box assembly, and to a food preparation apparatus comprising such a gear box assembly.

### BACKGROUND OF THE INVENTION

Mixer grinders are electrically powered food preparation devices that are particularly suitable for mixing and grinding hard, tough food items, such as nuts, seeds and beans, e.g. coffee beans. Mixer grinders often include a food preparation tool having a rotating blade for grinding and mixing the food that is driven by an electric motor. The rotating blade is typically mounted within a container, such as a glass, metal or plastic jar or bowl, for holding the food items during preparation.

### SUMMARY OF THE INVENTION

It is desirable to improve the utility of mixer grinders to enable them to be better suited to other food preparation tasks, such as kneading dough, dicing and chopping softer food items, such as vegetables. The invention is defined by the independent claims. The dependent claims define advantageous embodiments.

According to an embodiment of the present disclosure, there is provided a gear box assembly for a food preparation apparatus, the assembly comprising: an input gear configured, in use, to be rotatably driven by a power unit of the food preparation apparatus; a plurality of driven gears configured to engage with and be rotatably driven by the input gear, wherein the driven gears are arranged about the input gear, such that loads applied to the input gear by virtue of the engagement between the input gear and the plurality of driven gears are balanced, e.g. in one or more directions perpendicular to a rotational axis of the input gear; an output gear configured to engage, e.g. meshingly engage, with and be rotatably driven by the driven gears; and an output coupler rotatably driven by the output gear and configured to allow a food preparation tool to be rotatably driven by the gear box assembly, wherein a rotational axis of the output coupler is aligned, e.g. coaxial, with a rotational axis of the input gear.

The input gear, driven gears and output gear may be together configured to provide a desired gear ratio between the input and output gears. For example, the gear box assembly may be a speed reduction gear box. The input gear, driven gears and output gear may be together configured such that the input and output gears rotate in the same direction.

The output coupler may be integrally formed with the output gear. The output gear and the output coupler may be the most highly loaded components within the gear box. Hence, it may be desirable for the components to be formed from the same material and/or using the same process. Forming the components integrally may allow the ease of manufacturing and assembling the gear box assembly to be improved. Furthermore, forming the components integrally may allow the size of each component to be reduced, as interface features may be removed.

The driven gears may be supported relative to a housing of the gear box assembly such that rotational axes of the driven gears are fixed relative to the housing. Fixing the gears relative to the housing may provide a simpler arrangement than alternative speed reduction gear arrangements, such as epicyclical gears.

The gear box assembly may be provided within a common housing with the power unit. Alternatively, the gear box assembly may be provided within a separate housing from the power unit. Providing the gear box assembly within the same power unit of the food preparation apparatus may allow the overall size of the apparatus to be reduced. However, providing the gear box assembly in a separate housing provides more flexibility as the gear box assembly can be removed if desired, e.g. to drive a food preparation tool directly from the power unit.

The gear box assembly may further comprise a housing. The gear box assembly housing may be coupleable to the power unit, e.g. a housing of the power unit. When the gear box assembly is coupled to the power unit, the input gear may be arranged to be rotatably driven by the power unit, e.g. by an electric motor of the power unit. For example, an input coupler coupled to or integrally formed with the input gear may couple with an output coupler of the power unit.

The driven gears may be equally spaced around the circumference of the input gear.

In one arrangement, the gear box assembly comprises two driven gears provided on diametrically opposite sides of the input gear. In other words, the driven gears may be arranged opposite to one another relative to a plane parallel to the rotational axis of the input gear. This arrangement provides a simple configuration of gears that allows the loads, e.g. side loads, applied to the input gear to be balanced.

The driven gears may be pivotally supported on a gear carrier. The gear carrier may support the driven gears relative to the housing of the gear box assembly. For example, the gear carrier may be coupled, e.g. fixedly coupled, to the housing of the gear box assembly. Alternatively, the gear carrier may be integrally formed with the housing. Providing the gear carrier allows the structure of the gear box assembly to be better designed to carry loads from the gears. For example, the housing may be made lighter and the gear carrier may have a high stiffness in the directions in which the gears are loaded.

The output gear may be supported on the gear carrier. In this way, vertical loads from the output gear and/or output carrier can be supported by the gear carrier.

The driven gears may be compound gears comprising first and second gear components, e.g. wheels, configured to engage with the input gear and output gear respectively. The compound driven gears may be configured to provide an unequal gear ratio between the input and output gears. For example, different numbers of teeth may be provided on the first and second gear wheels of the compound driven gears.

According to another aspect of the present disclosure, there is provided a gear box assembly for a food preparation apparatus, the assembly comprising: an input gear configured, in use, to be rotatably driven by a power unit of the food preparation apparatus; a plurality of driven gears configured to engage with and be rotatably driven by the input gear, wherein the driven gears are arranged about the input gear, such that loads applied to the input gear by virtue of the engagement between the input gear and the plurality of driven gears are balanced, and wherein the driven gears are supported relative to a housing of the gear box assembly such that rotational axes of the driven gears are fixed relative to the housing; and an output gear configured to engage with and be rotatably driven by the driven gears.

A food preparation apparatus may comprise the above-mentioned gear box assembly of any of the preceding claims and a power unit configured, in use, to rotatably drive the input gear of the gear box assembly.

As described herein, proving the gear box assembly in the food preparation apparatus may allow the utility of the food preparation apparatus to be extended, such that more food preparation tasks can be performed using the food preparation apparatus.

The power unit may comprise an electric motor. The power unit may be provided within a first housing. The gear box assembly may be provided in a second housing. The first and second housings may be selectively couplable in order to arrange the input gear to be rotatably driven by the power unit. The second housing may be at least partially located within the first housing.

The first and second housings may be configured such that the second housing does not create overhang from the first housing when the first and second housings are coupled together, e.g. at the coupling between the first and second housings or relative to a base portion of the first housing. In this way, the stability of the food preparation apparatus may be improved.

The food preparation apparatus may further comprise one or more food preparation tools configured to couple to the output coupler of the gear box assembly. One or more of the food preparation tools may optionally be configured to be couplable to the power unit, such that the food preparation tool can be driven directly by the power unit, e.g. at a higher speed, or via the gear box assembly as desired.

The food preparation apparatus may be a mixer grinder, e.g. configured for grinding and mixing hard food items, such as spices, nuts and beans, using a food preparation tool comprising a rotating blade fixed within a container for holding the food.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### BRIEF DESCRIPTION OF THE DRAWINGS

For a better understanding of the present invention, and to show more clearly how it may be carried into effect, reference will now be made, by way of example, to the accompanying drawings, in which:
Fig. 1 is a front view of a food preparation apparatus according to arrangements of the present disclosure;
Fig. 2 is a cross-sectional view of the gear box assembly; and
Fig. 3 is an exploded view of the gear box assembly.

### DETAILED DESCRIPTION OF EMBODIMENTS

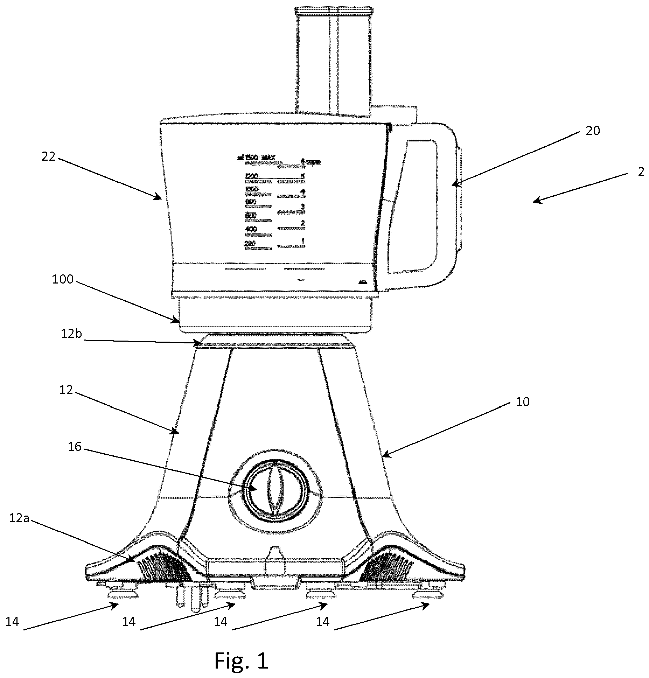

With reference to Fig. 1, a food preparation apparatus 2, such as a mixer grinder, comprises a power unit 10, a gear box 100 and a food preparation tool 20.

The power unit 10 comprises a housing 12 having a base 12a. One or more feet 14 may be provided on the base 12a for supporting the food preparation apparatus 2 on a surface, such as a kitchen work surface or table when the food preparation apparatus 2 is being operated.

The power unit 10 further comprises an electric motor (not shown), or other device, configured to drive the food preparation apparatus. The power unit 10 comprises an output coupler (not shown) and the electric motor is configured to drive, e.g. rotatably drive, the output coupler. The electric motor may be arranged to drive the output coupler directly. For example, the output coupler may be coupled to and/or formed integrally with an armature of the electric motor. Alternatively, the output coupler may be driven by the electric motor via a mechanical drive system, such a system of gears, belts and pulleys, and/or any other mechanical drive system.

The power unit 10 comprises a control input 16, such as a switch, configured to allow a user to selectively operate the electric motor to drive the food preparation apparatus. In some arrangements, the control input 16 may have a plurality of settings that can be selected by the user corresponding to different speeds, e.g. rotational speeds, at which the power unit 10 can drive the food preparation apparatus 2.

The housing 12 further comprises a connecting portion 12b. The connecting portion may comprise one or more coupling features configured to enable the gear box assembly 100 to be connected to the housing 12.

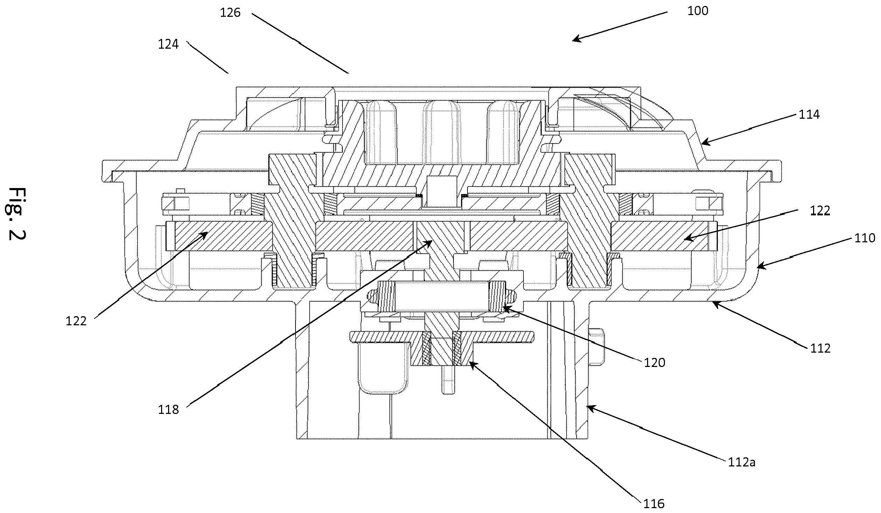

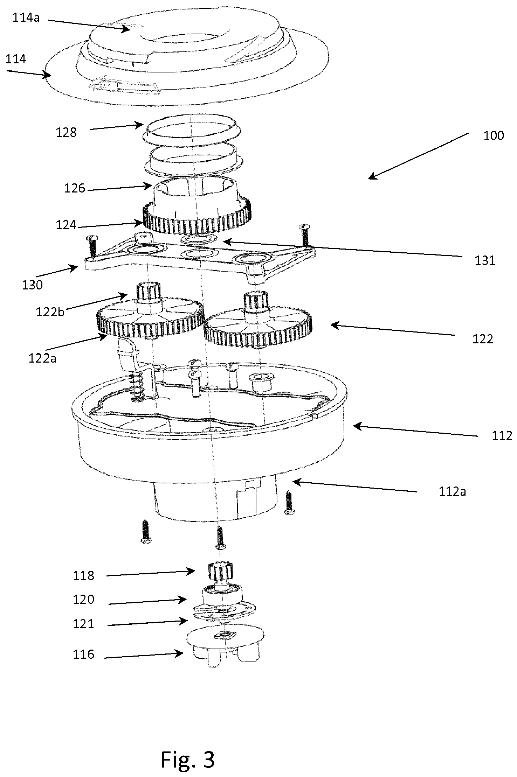

With reference to Figs. 2 and 3, the gear box assembly 100 comprises a housing 110 having a base portion 112 and a cover portion 114. The base portion 112 comprises a connecting portion 112a that is selectively connectable with the housing 12 of the power unit 10, e.g. at the connecting portion 12b, and may comprise connecting features that are complementary to those provided on the connecting portion 12b of the power unit 10.

The gear box assembly 100 further comprises an input coupler 116. The input coupler 116 is configured to be driven, e.g. rotatably driven, by the power unit 10, e.g. via the output coupler of the power unit. The power unit 10 and the gear box assembly 100 are configured such that, when the gear box assembly 100 is coupled to the power unit 10, the input coupler 116 of the gear assembly is engaged with the output coupler of the power unit 10, so that drive power can be transferred from the power unit 10 to the gear box assembly 100.

The input coupler 116 is coupled to an input gear 118 of gear box assembly 100 such that the input gear 118 rotates together with the input coupler 116. In alternative arrangements, the input gear 118 is formed integrally with the input coupler 116.

The gear box assembly 100 further comprises a bearing 120, such as a ball bearing, roller bearing, journal bearing or any other type of bearing, configured to support the rotation of the input gear 118 and input coupler 116 relative to the gear box assembly housing 110. The bearing 120 may be retained, e.g. in the housing 110, by a bearing retainer 121.

The gear box assembly 100 further comprises driven gears 122 configured to engage, e.g. meshingly engage, the input gear 118 such that rotation of the input gear 118 drives rotation of the driven gears 122.

As depicted in Figs. 2 and 3, the driven gears 122 are compound gears having a first gear component 122a and a second gear component 122b. The second gear component 12b is formed integrally with the first gear component 122a. However, in other arrangements, the second gear component 122b may be coupled to the first gear component 122a.

The first gear component 122a is configured to engage, e.g. meshingly engage, the input gear 118 and the second gear component 122b is configured to engage an output gear 124 of the gear box assembly 100. In this way, the driven gears 122 are configured to transfer the power provided to the gear box assembly 100 from the power unit 10 to the output gear 124.

The second gear component 122b has a different diameter from the first gear component 122a. Furthermore, the second gear component 122b has a different number of teeth from the first gear component 122a. Hence, an unequal gear ratio is established between the input and output gears 118, 124 of the gear box assembly 100. Furthermore, the output gear 124 may have a different number of teeth from the second gear component 122b and/or the input gear 118.

In the arrangement shown, the first gear component 122a has a greater number of teeth than the input gear 118, the second gear component 122b has a smaller number of teeth than the first gear component 122b and the output gear 124 has a greater number of teeth than the second gear component 122b. Hence, the gear box assembly 100 is configured as a speed reduction gear box. In other words, the gear box assembly 100 is configured such that the output gear 124 rotates at a lower speed than the input gear 118 when the input gear 118 is driven by the power unit 10.

The driven gears 122 are arranged about the input gear 118 such that loads, e.g. side load, applied to the input gear 118 by virtue of its engagement with the driven gears 122 are balanced. In other words, the driven gears 122 are arranged such that loads applied to the input gear 118 when drive power is transferred from the input gear 118 to the driven gears are balanced in directions perpendicular to the rotational axis of the input gear, e.g. when summed over all of the driven gears provided. For example, the driven gears 122 may be spaced equidistantly around the circumference of the input gear 118.

In the arrangements shown in Figs. 2 and 3, two driven gears 112 are provided and are arranged diametrically opposite to one another relative to the rotational axes of the input and output gears 118, 124.

Additionally or alternatively, in some arrangements, the driven gears 122 may be arranged about the output gear 124 in a similar manner, such that side loads applied to the output gear 124 are balanced.

In the arrangement depicted, the input gear 118, driven gears 122 and the output gear 126 comprise parallel spur gears. However, in other arrangements, the gears may comprise helical gears, bevel gear, or any other desirable gears, or combinations of different gears.

The gear box assembly 100 further comprises an output coupler 126 configured to rotate together with the output gear 124. In the arrangement depicted in Figs. 2 and 3, the output coupler is formed integrally with the output gear 124. However, in other arrangements, the output coupler may be coupled, e.g. directly coupled, to the output gear 124.

The gear box assembly 100 may further comprise bearing 128, such as a ball bearing, rolling bearing, bush or journal bearing arranged between the output coupler 126 and the housing 110 to support rotation of the output coupler 126 relative to the housing 110.

The gear box assembly 100 is configured such that the output coupler 126 (e.g. the rotational axis of the output coupler) and the input gear 118 (e.g. a rotational axis of the input gear) are aligned, e.g. coaxially aligned. Additionally or alternatively, the output gear 124 (e.g. a rotational axis of the output gear), may be aligned with the input gear. Aligning the input and the output coupler and/or the output gear of the gear box assembly allows the size of the gear box assembly to be reduced.

The gear box assembly 100 further comprises a gear carrier 130. The driven gears 122 are pivotally coupled to the gear carrier 128 via bushes or bearings 132. The gear carrier 130 is coupled to the housing 110. The position of the driven gears 122 (e.g. the rotational axes of the driven gears) are thereby fixed relative to the housing 110.

Additionally, in some arrangements, the output gear 124 and/or the output coupler 126 are at least partially supported by the gear carrier 130, e.g. in a direction parallel to their rotational axes. A washer 131 may be provided between the output gear 124 and the gear carrier 130.

As depicted in Fig. 3, the housing 110 (e.g. the cover portion of the housing 114), may comprise a connecting portion 114a. The connecting portion 114a may be configured to enable the food preparation tool 20 to be coupled to the gear box assembly 100, such that the food preparation tool 20 can be driven via the output coupler 126.

In the arrangement shown in Fig. 1, the food preparation tool 20 comprises a food processor. The food processor comprises a housing 22 that forms a container, such as a bowl, jar or jug, for holding food items and a cutting implement (not shown) arranged within the housing 22 for cutting, slicing, or grating the food, or performing any other desirable food preparation task depending on the type of cutting implement provided.

The food processor differs from the standard food preparation tool typically provided with a mixer grinder in that the cutting implement is removable from the food processor and can be interchanged with other cutting implements depending on the food preparation task being performed. Providing the food processor as part of the food preparation apparatus therefore enables the utility of the food preparation apparatus 2 to be extended.

It will be appreciated, that the standard food preparation tool for a mixer grinder may also be supplied with the food preparation apparatus 2. The food preparation apparatus 2 may be configured such that the food processor can be interchanged with the standard mixer grinder tool as desired by a user of the food preparation apparatus 2.

The food processor comprises an input coupler provided at a base 22a of the housing 22. The cutting implement is couplable to the input coupler and the food processor is configured such that, when the input coupler is rotatably driven, the cutting implement is rotated within the housing 22.

In some arrangements, the food preparation tool 20 is configured to be couplable to the power unit 10, such that the input coupler can be rotatably driven by the output coupler of the power unit 10.

Mixer grinders typically operate most effectively when the mixing and grinding tools are driven, e.g. rotated, at a high speed. Hence, the power unit 10 may be configured to operate at a high speed. However, when the food preparation tool is a food processor, the speed of rotation of the output coupler of the power unit 10 may be higher than a desired speed of rotation of the cutting implement provided within the food processor. Therefore, when the power unit 10 provided as part of the food preparation apparatus 2 is suitable for use as a mixer grinder power unit, the utility of the food preparation apparatus 2, e.g. the efficacy of the food preparation apparatus in performing other food preparation tasks, may be reduced.

As depicted in Fig. 1, the food preparation tool 20 is configured to be couplable to the gear box assembly 100, such that the input coupler of the food preparation tool can be rotatably driven by the output coupler 126 of the gear box assembly 100. As described above, the gear box assembly 100 comprises a speed reduction gear arrangement, such that the output coupler 126 rotates at a lower speed than the input coupler 116. Hence, when the food preparation tool 20 is coupled to the gear box assembly 100, the cutting implement of the food preparation tool 20 can be rotated at a reduced speed that may be more desirable for some food preparation tasks.

The housing 22 of the food preparation tool 20 may comprise a connecting portion 22b this is connectable to the connecting portion 114a of the gear box assembly 100. Additionally or alternatively, the connecting portion 22b of the food preparation tool 20 may be connectable to the power unit 10, e.g. at the power unit connecting portion 12a. In some arrangements, the connection portion of the power unit 10 and the connecting portion of the gear box assembly may be similar or the same.

In the same way, the input coupler of the food preparation tool 20 may be configured such that the input coupler can engage with and be rotatably driven by the output coupler of the power unit 10 and/or the output coupler 126 of the gear box assembly 100, e.g. when the food preparation tool 20 is coupled to the power unit or the gear box assembly 100 respectively. In some arrangements, the output coupler of the power unit 10 may be similar to, or the same as, the output coupler 126 of the gear box assembly 100.

The food preparation tool 20 can therefore be coupled to and driven by the power unit 10 or the gear box assembly 100 (being driven by the power unit 10), e.g. depending on the desirable speed of rotation of the cutting implement provided within the food preparation tool 20.

When the gear box assembly 100 is provided within the food preparation apparatus 2, the food preparation tool 20 may be positioned at a greater vertical height, e.g. relative to the base 12a of the power unit housing, when the food preparation apparatus is in use. However, as the input gear 118 and the output coupler 126 of the gear box assembly 100 are aligned, the position of the food preparation tool 20 may not change in a lateral direction, relative to the power unit 10, when the food preparation tool is coupled to the gear box assembly 100 compared to being coupled to the power unit 10 directly. An overhang of the food preparation tool over the base 12a of the power unit may therefore be the same regardless of whether the gear box assembly 100 is provided. Aligning the output coupler 126 of the gear box assembly 100 with the input gear therefore reduces the effect on the stability of the food preparation apparatus 2 which might otherwise be caused by providing the gear box assembly 100.

While the invention has been illustrated and described in detail in the drawings and foregoing description, such illustration and description are to be considered illustrative or exemplary and not restrictive; the invention is not limited to the disclosed embodiments.

For example, it is possible to operate the invention in an embodiment wherein the gear box assembly 100 is integrated with the power unit 10. In particular, the components of the gear box assembly 100 may be provided within the housing of the power unit 10 rather than being provided in the separate gear box assembly housing 110. In other arrangements, the gear box assembly 100 may be integrated with the food preparation tool 20, e.g. provided within the housing 22 of the food preparation tool.

Furthermore, although in the arrangement described above, the food preparation tool comprises a food processor, it is equally envisaged that the food preparation tool may comprise any other tool for the preparation of food having an implement, such as a blade, paddle or screw that is rotatably driven via an input coupler of the food preparation tool.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims shall not be construed as limiting the scope.

## Claims

1. A gear box assembly (100) comprising:
an input gear (118) configured, in use, to be rotatably driven by a power unit (10);
a plurality of driven gears (122) configured to engage with and be rotatably driven by the input gear, wherein the driven gears are arranged about the input gear, such that loads applied to the input gear by virtue of the engagement between the input gear and the plurality of driven gears are balanced;
an output gear (124) configured to engage with and be rotatably driven by the driven gears; and
an output coupler (126) rotatably driven by the output gear and configured to allow a tool (20) to be rotatably driven by the gear box assembly, wherein a rotational axis of the output coupler is aligned with a rotational axis of the input gear.

2. The gear box assembly (100) of claim 1, wherein the output coupler (126) is integrally formed with the output gear (124).

3. The gear box assembly (100) of any of the preceding claims, wherein the driven gears (122) are supported relative to a housing (110) of the gear box assembly such that rotational axes of the driven gears are fixed relative to the housing

4. The gear box assembly (100) of any of the preceding claims, wherein the gear box assembly is provided within a common housing with the power unit (10).

5. The gear box assembly (100) of any of claims 1 to 3, wherein the power unit (10) is provided in a first housing and the gear box assembly is provided in a second housing (110).

6. The gear box assembly (100) of claim 5, further comprising the gear box assembly housing (110), wherein the gear box assembly housing is coupleable to the power unit (10) such that the input gear (118) is arranged to be rotatably driven by the power unit (10).

7. The gear box assembly (100) of any of the preceding claims, wherein the driven gears (122) are equally spaced around the circumference of the input gear (118).

8. The gear box assembly (100) of any of the preceding claims, wherein the assembly comprises two driven gears (122) provided on diametrically opposite sides of the input gear (118).

9. The gear box assembly (100) of any of the preceding claims, wherein the driven gears (122) are pivotally supported on a gear carrier (130).

10. The gear box assembly (100) of claim 9, wherein the output gear (124) is supported on the gear carrier (130).

11. The gear box assembly (100) of any of the preceding claims, wherein the driven gears (122) are compound gears comprising first and second gear wheels (122a, 122b) configured to engage with the input gear (118) and output gear (124) respectively.

12. A food preparation apparatus (2) comprising the gear box assembly (100) of any of the preceding claims, and a power unit (10) configured, in use, to rotatably drive the input gear (118) of the gear box assembly.

13. The food preparation apparatus (2) of claim 12, wherein the power unit (10) is provided within a first housing (12) and the gear box assembly (100) is provided in a second housing (110), wherein the first and second housings are selectively couplable in order to arrange the input gear (118) to be rotatably driven by the power unit.

14. The food preparation apparatus (2) of claim 12 or 13 further comprising one or more food preparation tools (20) configured to couple to the output coupler (126) of the gear box assembly (100).

15. The food preparation apparatus (2) of any of claims 12 to 14, wherein the food preparation apparatus is a mixer grinder.
